# DEMANDE DE BREVET EUROPEEN

(11) **EP 3 958 419 A1**
(43) Date de publication de la demande: **23.02.2022**
(21) Numéro de dépôt: 21192065.7
(22) Date de dépôt: 19.08.2021
(51) Int. Cl.: H02H 3/22, H01R 13/24

(54) **PROCÉDÉ ET SYSTÈME DE PROTECTION D'UN ÉQUIPEMENT CONTRE LES SURTENSIONS**

(30) Priorité: 20.08.2020 FR 2008585
(71) Demandeur: Legrand France, 87000 Limoges (FR); Legrand SNC, 87000 Limoges (FR)
(72) Inventeur: MAYTRAUD, Frédéric, 87400 LA GENEYTOUSE (FR); DOUILLARD, Baptiste, 87000 LIMOGES (FR)
(74) Mandataire: Cabinet Camus Lebkiri

(57) **Abrégé**

L'invention porte principalement sur un procédé de protection d'un équipement électrique (7, 14) relié à un réseau câblé (2) comprenant au moins une ligne principale (3, 4, 5) dans laquelle un courant électrique est apte à circuler, et une ligne de terre (6) reliée à un dispositif de mise à la terre (8), lequel procédé comprenant les étapes successives de :
-détection d'un risque d'orage par des moyens de surveillance (13) de risque d'orage ;
-génération par des moyens de commande (12) d'une commande de déconnexion de l'équipement (7, 14) du réseau câblé (2) à la suite de la détection d'un risque d'orage ;
-ouverture de la ligne principale (3, 4, 5) du réseau câblé (2) par le moyen de coupure (9, 10) de la ligne principale, et
- après la mise en œuvre de cette étape d'ouverture de la ligne principale, l'ouverture de la ligne de terre (6) du réseau câblé (2) par le moyen de coupure (11) de terre.

## Description

### Domaine technique de l'invention

L'invention s'inscrit dans le domaine de la protection des équipements électriques contre les surtensions.

L'invention porte plus particulièrement sur un procédé et un système de protection contre les surtensions d'au moins un équipement relié à un réseau câblé, notamment un réseau d'alimentation électrique ou un réseau téléphonique domestiques.

### Arrière-plan technologique de l'invention.

De manière générale, les équipements électriques branchés aux réseaux câblés des installations domestiques risquent d'être soumis à d'importantes surtensions principalement générées par des chocs de foudres indirect. Ces surtensions transitoires, qui peuvent atteindre plusieurs dizaines de kilovolts sur quelques microsecondes, se propagent dans l'installation électrique domestique et endommagent les équipements électriques reliés à cette installation et/ou déclenchent des dispositifs différentiels de manière intempestive.

Il existe des solutions d'atténuation de ces surtensions, par exemple des dispositifs passifs comme les parafoudres ou des dispositifs mécaniques comme les sectionneurs. Ces solutions présentent néanmoins des inconvénients puisque les dispositifs passifs ne filtrent qu'une partie des surtensions, et les dispositifs mécaniques ne permettent pas de garantir totalement la sécurité d'un utilisateur lors de la déconnexion des équipements électriques. En outre, ces solutions ne sont pas assez efficaces car non asservies à des données météorologiques.

Il est également connu de la publication FR 2811819 un dispositif de surveillance automatique de l'activité électromagnétique atmosphérique et de déconnexion automatique d'une installation électrique en cas de détection d'orage. Cependant, ce dispositif ne permet pas non plus de garantir totalement la sécurité d'un utilisateur lors de la déconnexion ou de la connexion des équipements électriques.

L'invention vise ainsi à fournir un procédé et un système de protection d'un équipement électrique qui offrent une protection contre les surtensions plus fiable et plus efficace.

### Exposé de l'invention

À cet effet, l'invention propose un procédé de protection d'un équipement électrique relié à un réseau câblé comprenant au moins une ligne principale dans laquelle un courant électrique est apte à circuler, et une ligne de terre reliée à un dispositif de mise à la terre, lequel procédé est mis en œuvre par un système de protection contre les surtensions comprenant :
- un dispositif d'isolement comprenant au moins un moyen de coupure de ligne principale pour ouvrir une ligne principale et un moyen de coupure de terre pour ouvrir la ligne de terre du réseau câblé,
- des moyens de commande desdits moyens de coupure et
- des moyens de surveillance de risque d'orage reliés aux moyens de commande,
   i. le procédé comprenant les étapes successives de :
      a. détection d'un risque d'orage par les moyens de surveillance de risque d'orage ;
      b. génération et envoie par les moyens de commande d'une commande de déconnexion électrique de l'équipement à la suite de la détection d'un risque d'orage, au dispositif d'isolement; ;
      c. ouverture de l'au moins une ligne principale du réseau câblé par l'au moins un moyen de coupure de ligne principale, et
      d. après la mise en œuvre de cette étape d'ouverture de l'au moins une ligne principale, l'ouverture de la ligne de terre du réseau câblé par le moyen de coupure de terre.

Ainsi, le procédé de protection d'un équipement électrique permet en cas de détection d'un risque d'orage d'ouvrir avant la ligne principale avant la ligne de terre afin d'éviter une période de temps des équipements électrique reliés aux réseaux sans être reliés à la ligne de terre. Un tel procédé permet donc une protection par prévention contre les surtensions plus fiable et plus efficace.

Le procédé de protection de l'invention peut également comporter les caractéristiques optionnelles décrites dans les paragraphes suivants considérées isolément ou selon toutes les combinaisons techniques possibles :

La détection d'un risque d'orage préalable à la génération de la commande de déconnexion est réalisée selon les sous-étapes suivantes :
- analyse des données recueilli par les moyens de surveillance ;
- détermination d'un niveau de risque d'orage à partir des données de surveillance ;
- comparaison du niveau de risque déterminé avec un niveau de risque seuil ;
- si le niveau de risque déterminé dépasse le niveau de risque seuil, génération de la commande de déconnexion par les moyens de commande.

Cette caractéristique optionnelle permet de préciser la détermination d'un niveau de risque d'orage, en effet les données provenant des moyens de surveillance peuvent être très locales comme des données d'une station de météo locale.
- Selon un exemple de cette caractéristique optionnelle, le niveau de risque seuil est choisi parmi plusieurs niveaux de risque seuil prédéterminés. Ainsi, le niveau de risque seuil peut être choisi par l'installateur ou l'utilisateur. Cela permet donc de personnaliser le niveau de risque seuil pour déconnecter l'équipement électrique.

Le procédé comprend, préalablement à l'étape d'ouverture de la ligne de terre, une étape de vérification de l'ouverture de l'au moins une ligne principale et en ce que l'étape d'ouverture de la ligne de terre est effectuée si et seulement si la vérification de l'au moins une ligne principale ouverte est confirmée. Cette caractéristique optionnelle permet de s'assurer que la ligne principale est ouverte avant d'ouvrir la ligne de terre et ainsi éviter une période de temps à risque des équipements électrique reliés aux réseaux sans être reliés à la ligne de terre. Un tel procédé permet donc une protection contre les surtensions plus fiable. Par vérification de l'au moins une ligne principale ouverte, on entend que s'il y a plusieurs lignes principales, la vérification est confirmée que si toutes les lignes principales sont ouvertes. Le dispositif d'isolement peut comprendre des dispositifs de vérification pour effectuer les étapes de vérifications.

Le procédé comprend, préalablement à l'étape d'ouverture de la ligne de terre, d'envoi d'une donnée de confirmation de l'ouverture de la ligne principale. Cette caractéristique optionnelle permet de pouvoir avertir l'utilisateur de la déconnexion afin que ce dernier ne soit pas surpris et ne cherche pas la raison de la déconnexion.

Le procédé comprend en outre, à la suite de l'ouverture de ladite ligne de terre, une étape de vérification de l'ouverture de ladite ligne de terre. Cela permet de pouvoir s'assurer que la ligne de terre est ouverte et ainsi que la masse de l'équipement ne soit plus reliée à la terre et en outre cela peut permettre de s'assurer que celle-ci soit reliée à la terre pour la reconnexion de la ligne principale.

Le procédé comprend en outre une étape d'envoi d'une donnée de confirmation de l'ouverture de la ligne de terre. Cela permet de pouvoir avertir l'utilisateur de la déconnexion totale des équipements afin que l'utilisateur ne soit pas surpris et ne cherche pas la raison de la déconnexion et soit rassuré que la déconnexion totale soit bien réalisée.

Le procédé comprend en outre les étapes successives de :
- envoi par les moyens de commande d'un message de déconnexion électrique imminente de l'équipement du réseau câblé vers des moyens d'information ;
- déclenchement d'une temporisation ;
- envoi d'une commande de déconnexion de l'équipement du réseau câblé une fois la temporisation écoulée au dispositif d'isolement.

Cette caractéristique optionnelle permet à l'utilisateur d'avoir une période de temps correspondant au déclenchement pour se préparer à la coupure, par exemple déconnecter de la ligne principale les équipements sensibles aux déconnexions, ou encore mettre une batterie pour un équipement nécessaire à l'utilisateur pendant la coupure.

Le procédé comprend les étapes supplémentaires successives de :
- envoi d'une commande de reconnexion de l'équipement à un réseau extérieur du réseau câblé à la suite de la détection par les moyens de surveillance d'une fin de risque d'orage;
- fermeture de la ligne de terre du réseau câblé, et à la suite de la mise en œuvre de cette étape,
- fermeture de la ligne principale du réseau câblé.

Cette caractéristique optionnelle permet de fermer la ligne de terre avant la ligne principale afin d'éviter une période de temps des équipements électrique reliés aux réseaux sans être reliés à la ligne de terre. Un tel procédé permet donc une protection contre les surtensions plus fiable et plus efficace.
- Selon un exemple de cette caractéristique optionnelle, l'étape de détection d'une fin de risque d'orage est réalisée dès que le niveau de risque déterminé devient inférieur à un second niveau de risque seuil inférieur au premier seuil. Cet exemple permet d'éviter des changements intempestifs de détection de risque d'orage et de fin d'orage entrainant des connexions et déconnexions intempestifs.
- Selon un exemple de cette caractéristique optionnelle, le procédé comprend préalablement à l'étape de fermeture de la ligne principale, une étape de vérification que la ligne de terre est fermée et en ce que l'étape de fermeture de la ligne principale est effectuée que si la fermeture de la ligne de terre est confirmée. Cette caractéristique de cet exemple optionnelle permet une confirmation de la fermeture et donc une meilleure sécurité. Le procédé peut comprendre en outre dans cet exemple une étape d'envoi d'une donnée de confirmation de la connexion de la ligne de terre. Cette caractéristique de cet exemple optionnelle permet à l'utilisateur de savoir que le ou les équipements sont de nouveaux connectés à la ligne principale.
- Selon un exemple de cette caractéristique optionnelle, le procédé comprend après l'étape de fermeture de la ligne principale une étape de vérification de fermeture de l'au moins une ligne principale et d'envoi de confirmation de la connexion de l'au moins une ligne principale vers un dispositif d'affichage.

Le procédé dans lequel le réseau câblé comprend un réseau d'alimentation électrique primaire comprenant un réseau d'alimentation électrique intérieur et un réseau électrique extérieur reliés l'un à l'autre par le biais des moyens de coupure et en ce que le réseau d'alimentation électrique primaire comprend:
- une ligne de phase primaire formant une première ligne principale comprenant un conducteur phase primaire et un conducteur d'alimentation d'installation reliés ensemble par le moyen de coupure de ligne principale comprenant un premier contact dans un état fermé et
- une ligne neutre primaire formant une deuxième ligne principale comprenant un conducteur retour de phase primaire et un conducteur de retour d'alimentation d'installation reliés ensemble par le moyen de coupure de ligne principale comprenant un deuxième contact dans un état fermé, et
- la ligne de terre comprenant un conducteur externe terre et un conducteur interne terre reliés ensemble par le moyen de coupure de terre
- et dans lequel l'étape d'ouverture de l'au moins une ligne principale du réseau câblé par le moyen de coupure de ligne principale comprend :
   i. une sous étape d'ouverture du premier contact entre le conducteur phase primaire et le conducteur d'alimentation d'installation et
   ii. une sous étape d'ouverture du deuxième entre le conducteur phase retour de phase primaire et le conducteur de retour d'alimentation d'installation,
   iii. les deux sous étapes étant effectuées avant l'étape d'ouverture de la ligne de terre du réseau câblé par le moyen de coupure de terre.

Cette caractéristique optionnelle permet de protéger les équipements reliés à un réseau électrique monophasé (phase neutre) ou biphasé en cas de foudre.
- Selon un exemple de cette caractéristique optionnelle, la sous étape d'ouverture du premier contact est simultanée avec la sous étape d'ouverture du deuxième contact.
- Selon un exemple de cette caractéristique optionnelle, le dispositif d'isolement comprend :
   i. un deuxième moyen de coupure, comprenant un premier contact dans un état ouvert et un deuxième contact dans un état ouvert,
   ii. un moyen d'inversion de la ligne de terre reliés aux moyens de commande et actionnables entre une première position mise à la terre reliant un conducteur interne terre de la ligne de terre destinée à être reliée à la masse d'un équipement au moyen de coupure de terre et une deuxième position de mise au neutre du conducteur interne terre au conducteur de retour d'alimentation d'installation,
   iii. dans lequel le réseau d'alimentation primaire est un réseau phase-neutre, dans lequel la deuxième ligne principale est un neutre et en ce que le réseau câblé comprend en outre un réseau d'alimentation secondaire comprenant :
      1. une ligne de phase secondaire destinée à être reliée au conducteur d'alimentation d'installation par le premier contact du deuxième moyen de coupure, et
      2. une ligne neutre secondaire destinée à être reliée au conducteur de retour d'alimentation d'installation par le deuxième contact du deuxième moyen de coupure,
   iv. le procédé comprenant à la suite de l'étape d'ouverture de la ligne de terre du réseau primaire, les étapes successives de :
      1. actionnement du moyen d'inversion depuis sa première position vers sa deuxième position, et
      2. fermeture du premier et deuxième contact du deuxième moyen de coupure entre d'une part la ligne de phase secondaire et le conducteur d'alimentation d'installation et d'autre part la ligne neutre secondaire du réseau secondaire et le conducteur retour d'alimentation d'installation.

Cette caractéristique optionnelle permet de changer le schéma de liaison à la terre et de protéger l'équipement tout en l'alimentant. En effet, pendant la déconnexion au réseau primaire, l'équipement est relié au réseau secondaire. Un tel procédé permet donc une protection contre les surtensions plus fiable et plus efficace en ayant une continuité de service.
- Selon un exemple, le réseau d'alimentation secondaire est une source secondaire telle qu'un ensemble comprenant une batterie et un onduleur. Cette caractéristique optionnelle de cet exemple permet d'avoir un réseau secondaire indépendant et sûre en cas d'orage.
- Selon un exemple, le système comprend un dispositif de vérification de la deuxième position et première position du moyen d'inversion, et en ce que le procédé comprend une étape de vérification de la connexion du conducteur retour d'alimentation d'installation de la ligne neutre au conducteur interne terre.

Le procédé comprend en outre les étapes successives de :
- envoi par les moyens de commande d'une information de déconnexion imminente de l'équipement du réseau câblé vers une interface homme machine comprenant les moyens d'information ;
- déclenchement d'une temporisation et invitation d'un utilisateur à interagir avec l'interface homme machine en confirmant ou en refusant la déconnexion ;
- envoi d'une commande de déconnexion de l'équipement du réseau câblé si :
   i. l'utilisateur interagit avec l'interface homme machine et confirme la déconnexion de l'équipement, ou si
   ii. l'utilisateur n'interagit pas avec l'interface homme machine et que la temporisation est écoulée.

Cette caractéristique optionnelle permet de laisser un choix à l'utilisateur de déconnexion par rapport au risque d'orage selon les équipements connectés sensibles ou non à la surtension et en outre peut en particulier s'il est sur place, déterminer que son expérience de savoir s'il y a un risque d'orage est faible et est plus précis que par les données.

L'invention vise également un système de protection contre les surtensions, adapté pour déconnecter un équipement électrique relié à au moins un réseau câblé comprenant au moins une ligne principale dans laquelle un courant électrique est apte à circuler et une ligne de terre reliée à un dispositif de mise à la terre, lequel système comprend
- un dispositif d'isolement comprenant au moins un moyen de coupure de ligne principale pour ouvrir une ligne principale et un moyen de coupure de terre pour ouvrir la ligne de terre entre un réseau d'alimentation électrique intérieur et un réseau extérieur du réseau câblé,
- des moyens de commande desdits moyens de coupure et
- des moyens de surveillance du risque d'orage reliés aux moyens de commande,
- lequel système est configuré pour successivement envoyer une commande de déconnexion de l'équipement du réseau câblé à la suite de la détection d'un risque d'orage, couper la ligne principale du réseau câblé, et couper la ligne de terre du réseau câblé. Ainsi, le système de protection permet en cas de détection d'un risque d'orage d'ouvrir avant la ligne principale avant la ligne de terre afin d'éviter une période de temps des équipements électrique reliés aux réseaux sans être reliés à la ligne de terre. Un tel système permet donc une protection par prévention contre les surtensions plus fiable et plus efficace.

Le système de protection de l'invention peut également comporter les caractéristiques optionnelles décrites dans les paragraphes suivants considérées isolément ou selon toutes les combinaisons techniques possibles :

Le système comprend un premier dispositif de vérification de la connexion et déconnexion de la ligne principale du réseau d'alimentation électrique intérieur au réseau extérieur du réseau câblé, le premier dispositif de vérification étant électriquement relié à la ligne principale et aux moyens de commande et en ce que les moyens de commande commandent l'ouverture de la ligne de terre après confirmation de la déconnexion de la ligne principale du réseau d'alimentation électrique intérieur au réseau extérieur du réseau câblé.

Cette caractéristique optionnelle permet de s'assurer que la ligne principale est ouverte avant d'ouvrir la ligne de terre et ainsi éviter une période de temps à risque des équipements électrique reliés aux réseaux sans être reliés à la ligne de terre. Un tel système permet donc une protection contre les surtensions plus fiable.

Le système comprend un dispositif de vérification de la connexion et déconnexion de la ligne de terre du réseau câblé électriquement relié à la ligne de terre et aux moyens de commande. Cela permet de pouvoir s'assurer que la ligne de terre ne soit plus reliée à la terre et en outre cela peut permettre de s'assurer que celle-ci soit reliée à la terre pour la reconnexion de la ligne principale.

Le système comprend des moyens d'information du type écran d'affichage reliés aux moyens de commande et adaptés pour recevoir et afficher un message de déconnexion imminente de l'équipement du réseau câblé.

Le système, dans lequel le réseau câblé comprend un réseau d'alimentation électrique primaire comprenant un réseau d'alimentation électrique intérieur et un réseau électrique extérieur reliés l'un à l'autre par le biais des moyens de coupures et
- en ce que le réseau d'alimentation électrique primaire comprend :
   i. une ligne de phase primaire formant une première ligne principale, comprenant un conducteur phase primaire et un conducteur d'alimentation d'installation reliés ensemble par le moyen de coupure comprenant un premier contact dans un état fermé,
   ii. une ligne neutre primaire formant une deuxième ligne principale comprenant un conducteur retour de phase primaire et un conducteur de retour d'alimentation d'installation reliés ensemble par le moyen de coupure de ligne principale comprenant un deuxième contact dans un état fermé,
   iii. la ligne de terre comprenant un conducteur externe terre et un conducteur interne terre reliés ensemble par le moyen de coupure de terre, et
- le moyen de coupure de ligne principale comprend :
   i. un premier contact, reliant dans un état fermé un conducteur d'alimentation d'installation et un conducteur phase primaire formant ensemble une phase de la première ligne principale,
   ii. un deuxième contact dans un état fermé, reliant un conducteur retour de phase et un conducteur de retour d'alimentation d'installation formant ensemble un retour de phase de la deuxième ligne principale,
- le système ouvrant le moyen de coupure de ligne principale à l'état ouvert ouvrant la première et la deuxième ligne principales avant que le moyen de coupure de terre ouvre la ligne de terre.

Cette caractéristique optionnelle permet de protéger les équipements reliés à un réseau électrique monophasé (phase neutre) ou biphasé en cas de foudre.
- Selon un exemple de cette caractéristique optionnelle, dans lequel le réseau d'alimentation primaire est un réseau phase-neutre, dans lequel la deuxième ligne principale est un neutre et en ce que le réseau câblé comprend en outre un réseau d'alimentation secondaire comprenant :
   i. une ligne de phase secondaire pour être reliée au conducteur d'alimentation d'installation et
   ii. une ligne neutre secondaire pour être reliée au conducteur de retour d'alimentation d'installation,
   iii. le système de protection est caractérisé en ce qu'il comprend :
      1. un deuxième moyen de contact comprenant :
         a. un premier contact pour relier la ligne de phase secondaire du réseau d'alimentation secondaire au conducteur d'alimentation d'installation et
         b. un deuxième contact pour relier la ligne neutre secondaire reliée le conducteur de retour d'alimentation d'installation,
      2. un moyen d'inversion de la ligne de terre commandé par les moyens de commande et actionnable entre une première position mise à la terre reliant un conducteur interne terre de la ligne de terre destinée à être reliée à la masse de l'équipement au moyen de coupure de terre et une deuxième position de mise au neutre du conducteur interne terre au conducteur de retour d'alimentation d'installation.

Le système comprend une interface homme machine reliée aux moyens de commande, comportant les moyens d'information et configurée pour permettre à un utilisateur d'interagir avec ledit système de protection.

Les moyens de surveillance de risque d'orages sont configurés pour déterminer un niveau de risque d'orage et les moyens de commande sont configurés pour comparer le niveau de risque déterminé avec le niveau de risque seuil et pour envoyer une commande de déconnexion de l'équipement électrique du réseau câblé si le niveau de risque d'orage déterminé est supérieur au niveau de risque seuil.

Le réseau câblé comprend un réseau téléphonique comportant un câble de signaux formant ligne principale et un câble de blindage formant ligne de terre.

L'invention vise également un dispositif d'isolement adapté pour déconnecter un équipement électrique relié à au moins un réseau câblé comprenant au moins une ligne principale dans laquelle un courant électrique est apte à circuler et une ligne de terre reliée à un dispositif de mise à la terre, lequel dispositif d'isolement comprend au moins un moyen de coupure de ligne principale pour ouvrir une ligne principale et un moyen de coupure de terre pour ouvrir la ligne de terre, les moyens de coupures étant adaptés à être connecté à des moyens de commande desdits moyens de coupure, lequel dispositif d'isolement est configuré pour, par suite d'une commande d'isolement de l'équipement du réseau câblé, que les moyens de coupures successivement ouvre l'au moins une ligne principale du réseau câblé, et ensuite déconnecte la ligne de terre du réseau câblé.

Ainsi, le dispositif d'isolement permet de recevoir une commande notamment en cas de détection d'un risque d'orage et ainsi d'ouvrir la ligne principale avant la ligne de terre afin d'éviter une période de temps des équipements électrique reliés aux réseaux sans être reliés à la ligne de terre. Un tel dispositif d'isolement permet donc une protection par prévention contre les surtensions plus fiable et plus efficace.

Le dispositif d'isolement de l'invention peut également comporter les caractéristiques optionnelles suivantes considérées isolément ou selon toutes les combinaisons techniques possibles :

Le dispositif d'isolement comprend en outre un dispositif de vérification permettant de vérifier que l'au moins une ligne principale est ouverte après la demande d'isolement et en ce que l'ouverture de la ligne de terre est réalisée à la suite de la vérification confirmée de l'ouverture l'au moins une ligne principale.
- Selon un exemple, le dispositif d'isolement comprend en outre des moyens de signalement de la confirmation de l'ouverture de l'au moins une ligne principale.

Le dispositif d'isolement comprend en outre un dispositif de vérifications permettant de vérifier l'ouverture de la ligne de terre par le moyen de coupure de terre.
- Selon un exemple, le dispositif d'isolement comprend en outre des moyens de signalement de la confirmation de la déconnexion de la ligne de terre.

Le dispositif d'isolement est adapté, à la suite d'une commande de connexion, à successivement connecter la ligne de terre à la terre et en suite, à fermer l'au moins une ligne principale.
- Selon un exemple, le dispositif d'isolement comprend en outre un dispositif de vérification permettant de vérifier la fermeture de la ligne de terre par le moyen de coupure de terre et en ce que la fermeture de l'au moins une ligne principale est réalisée à la suite de la vérification confirmée de la fermeture de la ligne de terre.
- Selon un exemple, le dispositif d'isolement comprend en outre un dispositif de vérification permettant de vérifier que l'au moins une ligne principale est fermée après la demande de connexion.

Le moyen de coupure de ligne principale comprenant :
- un premier contact d'une première ligne principale comprenant une borne destinée à être reliée au secteur par un conducteur phase primaire et une deuxième borne destinée à être reliée à l'équipement par le biais d'un conducteur d'alimentation d'installation, le premier contact fermant la première ligne principale dans un état fermé et ouvrant la première ligne principale dans un état ouvert,
- un deuxième contact d'une deuxième ligne principale comprenant une borne destinée à être reliée au secteur par un conducteur retour de phase primaire et une deuxième borne destinée à être reliée à l'équipement par le biais d'un conducteur de retour d'alimentation d'installation, le premier contact fermant la deuxième ligne principale dans un état fermé et ouvrant la deuxième ligne principale dans un état ouvert.
- Selon un exemple, le dispositif d'isolement comprend :
   i. un deuxième moyen de coupure destiné à être raccordé à un réseau secondaire et en ce que le deuxième moyen de coupure comprend des contacts comprenant chacun une borne reliée électriquement à une deuxième borne correspondante du moyen de coupure de ligne principale, et
   ii. un moyen d'inversion de la ligne de terre commandé par les moyens de commande et actionnable entre une première position de liaison électrique du moyen de coupure de terre à une borne masse destinée à être reliée à l'équipement électrique et une deuxième position de liaison électrique de la borne masse de l'équipement au conducteur de retour d'alimentation d'installation, et en ce que suite à la réception d'une commande d'isolement le dispositif est adapté, suite à l'étape d'ouverture de la ligne de terre du réseau primaire, à déplacer le moyen d'inversion de la ligne de terre de sa première position vers sa deuxième position, et ensuite à fermer le premier et deuxième contact du deuxième moyen de coupure pour raccorder électriquement l'équipement à une ligne de phase secondaire et une ligne neutre secondaire du réseau secondaire.

### Brève description des dessins

D'autres caractéristiques et avantages de l'invention ressortiront clairement de la description qui en est donnée ci-dessous, à titre indicatif et nullement limitatif, en référence aux figures annexées parmi lesquelles :
[Fig. 1] est un schéma d'un circuit électrique comprenant un réseau d'alimentation électrique, un réseau téléphonique domestique et un système selon l'invention de protection contre les surtensions des équipements reliés à ces réseaux ;
[Fig. 2] est un schéma d'un circuit électrique comprenant un réseau primaire d'alimentation électrique, un réseau secondaire d'alimentation et le système de protection contre les surtensions d'un équipement relié à ces réseaux ;
[Fig. 3] représente un schéma d'une partie du circuit de la figure 2 préalablement à la mise en œuvre d'un procédé de protection contre les surtensions selon l'invention ;
[Fig. 4] représente le schéma du circuit de la figure 3 par suite de la mise en œuvre d'une première étape du procédé de protection ;
[Fig. 5] représente le schéma du circuit de la figure 3 par suite de la mise en œuvre d'une deuxième étape du procédé de protection ;
[Fig. 6] représente le schéma du circuit de la figure 3 par suite de la mise en œuvre d'une troisième étape du procédé de protection ;
[Fig. 7] représente le schéma du circuit de la figure 3 par suite de la mise en œuvre d'une quatrième étape du procédé de protection ;
[Fig. 8] représente le schéma du circuit de la figure 3 par suite de la mise en œuvre d'une cinquième étape du procédé de protection ;
[Fig. 9] représente le schéma du circuit de la figure 3 par suite de la mise en œuvre d'une sixième étape du procédé de protection ;
[Fig. 10] représente le schéma du circuit de la figure 3 par suite de la mise en œuvre d'une septième étape du procédé de protection ;
[Fig. 11] représente le schéma du circuit de la figure 3 par suite de la mise en œuvre d'une dernière étape du procédé de protection ;

### Description détaillée de l'invention

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

On entend par le terme « relier », le fait d'être relier électriquement.

L'invention trouve son application dans le domaine de la protection des installations électriques. Plus précisément, l'invention permet de détecter un risque d'orage et, en cas de détection d'un tel risque, permet de déconnecter le ou les équipements électriques reliés à un réseau câblé selon une séquence déterminée pour éviter l'occurrence de surtension d'une part et protéger les utilisateurs d'autres part.

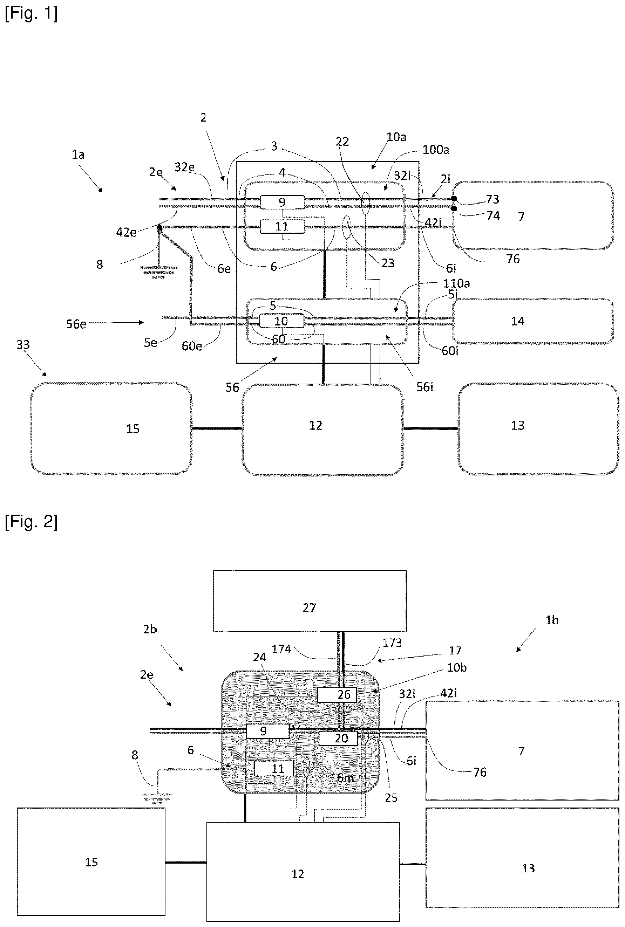

La figure 1 est un schéma d'un circuit électrique comprenant un réseau d'alimentation électrique, un réseau téléphonique domestique et un système selon l'invention de protection contre les surtensions des équipements reliés à ces réseaux.

En référence à la figure 1, le système de protection 1a contre les surtensions va être décrit selon un premier mode de réalisation. Le système de protection 1a contre les surtensions permet la prévention d'une surtension d'au moins un équipement d'une installation, notamment produit par un éclair d'un orage. Dans l'exemple qui suit l'installation comprend un équipement électrique 7 mais pourrait comprendre plusieurs équipements électriques.

L'équipement électrique 7 à protéger est relié à un réseau câblé 2 qui comprend une ligne principale 3, 4. Dans ce mode de réalisation, le réseau câblé 2, comprend un réseau d'alimentation électrique primaire comprenant un réseau d'alimentation électrique intérieur 2i et un réseau électrique extérieur 2e qui sont reliés l'un à l'autre par le biais d'un dispositif d'isolement 10a décrit en détail dans la suite. Le réseau d'alimentation électrique comprend typiquement deux lignes dites principales 3, 4, respectivement une ligne de phase primaire 3 et une ligne neutre primaire 4, et une ligne dite de terre 6 reliée en l'occurrence à une masse 76 de l'équipement électrique 7.

La première ligne principale 3 du réseau primaire comprend, dans la partie du réseau d'alimentation électrique intérieur 2i, un conducteur d'alimentation d'installation 32i et un conducteur phase primaire 32e dans le réseau d'alimentation extérieur 2e formant ensemble une phase. Le conducteur phase primaire 32e dans le réseau d'alimentation extérieur 2e est adapté à être connecté à un secteur d'alimentation électrique typiquement un réseau de transport et de distribution d'électricité distribuant du courant alternatif.

La deuxième ligne principale 4 du réseau primaire comprend, dans le réseau d'alimentation électrique intérieur 2i un conducteur de retour d'alimentation d'installation 42i et un conducteur retour de phase 42e du réseau électrique extérieur 2e, formant ensemble un retour de phase, en l'occurrence un neutre.

Le conducteur retour de phase 42e dans le réseau d'alimentation extérieur 2e est adaptée à être connecté au secteur d'alimentation électrique.

La ligne de terre 6 comprend un conducteur interne terre 6i du réseau d'alimentation électrique intérieur 2i, relié à la masse 76 et comprend un conducteur externe terre 6e relié à un dispositif de mise à la terre 8, typiquement un piquet de terre, ayant un potentiel appelé terre. Le conducteur externe terre 6e est connecté en l'occurrence à un répartiteur du dispositif de mise à la terre 8.

Le ou les équipements électriques 7 (un seul est représenté sur la figure 1) comprend trois bornes de connexion au réseau d'alimentation électrique intérieur 2i: une première et une deuxième borne bornes 73, 74 agencées pour être respectivement reliées au conducteur d'alimentation d'installation 32i de la ligne de phase primaire 3 et au conducteur de retour d'alimentation d'installation 42i de la ligne neutre primaire 4, et la masse 76 reliée à la ligne de terre 6.

Pour protéger l'équipement électrique 7 contre les surtensions provoquées par la foudre lorsqu'il est électriquement relié au réseau d'alimentation électrique intérieur 2i, lequel réseau d'alimentation électrique intérieur 2i est lui-même électriquement relié au réseau extérieur 2e, le système de protection 1a comprend des moyens de commande 12 qui seront décrits ci-après et des moyens de surveillance 13 d'un risque d'orage reliés audits moyens de commande 12.

Les moyens de surveillance 13 comprennent au moins un capteur de cellule orageuse (non représenté), et préférentiellement une pluralité de capteurs. Les moyens de surveillance 13 peuvent ainsi comprendre :
- un avertisseur d'éclair, comprenant au moins un capteur à moulin à champs électrostatique qui permet de détecter et de signaler la présence d'un nuage chargé électriquement dans une zone de couverture d'un rayon d'environ quinze kilomètres. Ce type de capteur mesure le champ électrostatique et détecte les champs électriques rayonnés à la suite d'un impact de foudre. Il permet en outre d'estimer la distance séparant l'éclair du capteur ;
- un système de localisation d'éclairs comprenant une pluralité de capteurs agencée pour détecter les signaux électromagnétiques des éclairs. Ces capteurs sont distribués dans l'espace pour couvrir une zone de grande surface, typiquement d'un rayon de l'ordre de plusieurs centaines de kilomètres, et sont connectés entre eux et à des moyens de traitement pour former un réseau de localisation étendu.

On distingue les réseaux dits longue distance, qui détectent les signaux électromagnétiques des éclairs, par exemple d'une fréquence de l'ordre de 10 kHz, des réseaux de localisation VLF/LF (Very Low Frequency/Low Frequency, soit très basse fréquence/basse fréquence), qui détectent les signaux électromagnétiques des éclairs, par exemple dans une gamme de fréquences inférieures à 500 kHz. Les moyens de traitement de ces réseaux permettent de localiser les éclairs en comparant les par la méthode dite du temps d'arrivée. À la suite de l'émission d'un éclair, chaque capteur associe une date de détection (horaire) à une donnée de détection de l'éclair (lieu). Les moyens de traitement comparent alors ces différentes dates pour estimer la distance de l'éclair à chaque capteur, et ainsi localiser l'éclair.

En complément ou de manière alternative, les moyens de surveillance 13 comprennent des moyens de collecte de données météorologiques. Ces moyens de collecte peuvent par exemple être une simple application communicante avec les moyens de commande 12 du système de protection 1a, laquelle application est apte à collecter des données météorologiques transmises aux moyens de commande 12.

La communication entre les moyens de commande 12 et les moyens de surveillance 13 peuvent être par un réseau de type interne dans le cas où le moyen de surveillance est sur site où par un réseau externe dans le cas où le moyen de surveillance est délocalisé. Le réseau externe est sans fil, par exemple réseau de télécommunication sans fil, par exemple LTE 4G ou encore un réseau de communication sans fil à basse consommation (appelé aussi réseaux économes en énergie), par exemple à une fréquence de 902Mhz ou 868Mhz. Le réseau interne peut être filaire ou sans fil par exemple Wifi.

Les moyens de commande 12 du système de protection 1a sont par exemple une carte électronique comprenant au moins un espace mémoire permettant le stockage de programmes informatiques et des moyens de calcul comme un processeur assurant la mise en œuvre de ces programmes. La carte des moyens de commande 12 est agencée pour recevoir des données provenant notamment des moyens de surveillance 13, et pour générer des commandes dans le but de protéger l'équipement électrique 7 comme cela sera décrit ci-après. Dans cet exemple les moyens de commande 12 peuvent commander un ou plusieurs dispositifs d'isolement 10a, en l'occurrence un seul sur la figure 1.

Dans un autre exemple non représenté, le dispositif d'isolement 10a comprend le moyen de commande 12.

Le système de protection 1a comprend donc en outre le dispositif d'isolement 10a comprenant une unité d'isolement puissance 100a. L'unité d'isolement puissance 100a comprend un premier moyen de coupure 9, agencé pour ouvrir les lignes principales 3, 4 du réseau primaire, en déconnectant les conducteurs phase primaire 32e et retour de phase 42e du réseau extérieur 2e, respectivement des conducteurs d'alimentation d'installation 32i et de retour d'alimentation d'installation 42i du réseau intérieur 2i. L'unité d'isolement puissance 100a comprend un moyen de coupure 11 de terre pour ouvrir la ligne de terre 6 entre le conducteur interne terre 6i et le conducteur externe terre 6e afin de déconnecter la masse 76 du piquet de terre 8.

Ces moyens de coupure 9, 11 des lignes principales 3, 4 et de ligne de terre 6 sont, dans cet exemple, commandés par les moyens de commande 12 et en l'occurrence les commandes des moyens de coupures par le moyen de commande 12 de l'unité d'isolement puissance 100a sont communiquées par une liaison électrique mais pourrait être sans fil par le biais de moyens de communication sans fil. Les moyens de coupure 9, 11 comprennent par exemple deux interrupteurs (non représentés sur la figure 1) du type contacteurs ou sectionneurs commandés par les moyens de commande 12. Les interrupteurs comprennent en l'occurrence chacun un contact normalement ouvert et deux bornes de connexion, mais peuvent comprend chacun un contact normalement fermé. Chaque interrupteur est un interrupteur électromécanique tel que des relais.

Selon un autre exemple, l'interrupteur est un interrupteur électronique d'un dispositif d'isolement électronique comprenant un sectionneur ou un contacteur en série avec l'interrupteur électronique. Par exemple l'interrupteur électronique est un thyristor en aval du sectionneur ou contacteur, qui s'ouvre avant l'ouverture du sectionneur ou contacteur et se ferme après le sectionneur ou le contacteur. Ainsi l'interrupteur électronique permet d'isoler l'équipement et le sectionneur ou contacteur peut permettre d'isoler par un air gap pour protéger l'installation en cas de coup de foudre ainsi que l'interrupteur électronique.

Le premier interrupteur est donc agencé entre le conducteur phase primaire 32e et le conducteur d'alimentation d'installation 32i, tandis que le second interrupteur est donc agencé entre le conducteur retour de phase primaire 42e et un conducteur de retour d'alimentation d'installation 42i . En outre le moyen de coupure 11 de terre pour ouvrir la ligne de terre 6 comprend un interrupteur (non représenté sur la figure 1) du type contacteur ou sectionneur commandé par les moyens de commande 12 relié au conducteur interne terre 6i et au conducteur externe terre 6e pour séparer ou relier la masse 76 et le piquet de terre 8.

Le moyen de coupure 9 de ligne principale permettent ainsi la connexion ou la déconnexion de la liaison électrique entre le réseau extérieur 2e et le réseau d'alimentation électrique intérieur 2i de la ligne de phase primaire 3 et de la ligne neutre primaire 4. Le moyen de coupure 11 de terre permettent la connexion ou la déconnexion de la liaison électrique entre le dispositif de terre 8 et le conducteur interne terre 6i du réseau d'alimentation électrique intérieur 2i.

L'unité d'isolement puissance 100a comprend également un premier dispositif de vérification 22 de la connexion des lignes de phase 3 et neutre 4 du réseau d'alimentation électrique intérieur 2i au réseau extérieur 2e, lequel dispositif de vérification 22 est relié d'une part à la ligne de phase 3 et à la ligne neutre 4 et d'autre part aux moyens de commande 12.

L'unité d'isolement puissance 100a comprend en outre un second dispositif de vérification 23 de la connexion de la ligne de terre 6 du réseau d'alimentation électrique intérieur 2i au piquet de terre 8, lequel second dispositif 23 est relié d'une part à la ligne de terre 6 et d'autre part aux moyens de commande 12.

Dans l'exemple où le dispositif d'isolement 10a communique sans fil avec le moyen de commande 12, les dispositifs de vérification 22, 23 communiquent avec le moyen de commande 12 par le biais de moyen de communication sans fil du dispositif d'isolement 10a.

Les premier et second dispositifs de vérification 22, 23 sont en l'occurrence des dispositifs de mesure d'au moins une caractéristique électrique mais peuvent être aussi un système mécanique tel qu'un autre contact du moyen de coupure changeant d'état suivant les contacts du moyen de coupure permettant ainsi de vérifier une ouverture du contact de chaque interrupteur mécanique.

Les dispositifs de mesure d'une caractéristique électrique sont par exemple un voltmètre entre deux lignes principales du côté du réseau d'alimentation électrique intérieur 2i ou encore un voltmètre par ligne principale entre une ligne principale du côté du réseau d'alimentation électrique intérieur 2i et le conducteur interne terre 6i ou encore un ampèremètre par ligne principale en particulier sans fil qui mesure le champs magnétique entre une ligne principale du côté du réseau d'alimentation électrique intérieur 2i . Le dispositif de vérification 22 peut être un dispositif de contact supplémentaire intégré au dispositif de coupure mécaniquement lié aux contacts mais isolé électriquement permettant de transmettre une mesure au moyen de commande ou un dispositif de mesure transmettant un signal au dispositif de mesure.

Le dispositif de mesure 23 d'une caractéristique électrique est par exemple un ohmmètre entre les bornes du contact du moyen de coupure 11 de la ligne de terre 6 ou encore un dispositif électrique ayant une batterie entre le potentiel du conducteur interne terre 6i de la ligne de terre 6 et la terre ou encore entre le conducteur interne terre 6i de la ligne de terre 6 et le conducteur retour de phase 42e dans le cas d'un régime TT ou TN.

En référence à la figure 1 et de manière avantageuse, le système de protection 1a est également agencé pour protéger au moins un équipement de télécommunications 14 des surtensions, lequel équipement 14 est relié à un réseau de communication 56 comprenant une ligne principale de communication 5 faisant partie du réseau câblé 2. La ligne principale de communication 5 forme dans cet exemple, une troisième ligne principale.

La ligne principale de communication 5 comprend des conducteurs de transmission de signaux interne 5i, et des conducteurs de transmission de signaux externe 5e reliés à une arrivée ligne téléphonique. Les conducteurs de transmission de signaux interne 5i sont reliés à l'équipement de télécommunications 14 pour assurer la circulation d'un courant électrique permettant d'envoyer des signaux à l'équipement de télécommunications 14.

Le réseau de communication 56 comprend une seconde ligne de terre 60 comprenant une ligne de blindage 60i, pouvant être autour des conducteurs de transmission de signaux externe 5e, raccordée à l'équipement de télécommunications 14 et un deuxième conducteur de terre externe 60e relié au piquet de terre 8 en l'occurrence au répartiteur 80.

Le réseau de communication 56 comprend donc un réseau de communication interne 56i comprenant la ligne de blindage 60i et des conducteurs de transmission de signaux interne 5i.

Le réseau de communication 56 comprend donc en outre un réseau de communication externe 56e comprenant le conducteur de transmission de signaux externe 5e et le deuxième conducteur de terre externe 60e.

le système de protection 1a pourrait uniquement protéger le réseau d'alimentation électrique intérieur 2i ou uniquement le réseau de communication intérieur 56i.

Pour protéger l'équipement de télécommunications 14, le système de protection 1a comprend en outre une unité d'isolement de communication 110a. L'unité d'isolement de communication 110a comprend un moyen de coupure 10 du réseau de communication 56, lequel moyen de coupure 10 comprend un interrupteur du type contacteur ou sectionneur commandé par les moyens de commande 12 et agencé dans la ligne principale de communication 5 et la seconde ligne de terre pour les déconnecter. Dans cet exemple, le dispositif d'isolement 10a comprend l'unité d'isolement de transmission 110a comprenant le moyen de coupure 10 mais pourrait être un dispositif d'isolement séparé.

Le moyen de coupure 10 comprend des interrupteurs de ligne principale 5 connectés entre chaque conducteur de transmission de signaux externe 5e et chaque conducteur de transmission de signaux interne 5i correspondants ainsi qu'un interrupteur connecté entre la ligne de blindage 60i et le deuxième conducteur de terre externe 60e. Le moyen de coupure 10 forme donc un moyen de coupure de ligne principale et un moyen de coupure de terre. Selon un exemple, lorsque le moyen de coupure 10 reçoit une commande d'isolement par les moyens de commandes 12, le moyen de coupure 10 peut être configuré pour successivement déconnecter d'abord chaque conducteur de transmission de signaux externe 5e de chaque conducteur de transmission de signaux interne 5i et ensuite déconnecter la ligne de blindage 60i du deuxième conducteur de terre externe 60e. La déconnexion successive peut être réalisée électroniquement par une unité de commande ou encore mécaniquement, par exemple en ayant une course plus longue pour le contact entre la ligne de blindage 60i et le deuxième conducteur de terre externe 60e que le contact entre chaque conducteur de la ligne principale 5.

Le système de protection 1a comprend également des moyens d'information 15, par exemple un écran d'affichage, reliés aux moyens de commande 12, et qui sont agencés pour recevoir et afficher un message informant l'utilisateur de la déconnexion imminente de l'équipement électrique 7 et le cas échéant de l'équipement de télécommunication 14 du réseau câblé 2. Avantageusement, ces moyens d'information 15 peuvent être intégrés dans une interface homme machine 33, dont la fonction sera précisée ci-après.

Le moyen de commande 12 peut communiquer sans fil avec les moyens d'information 15, par internet ou encore un dispositif peut comprendre le moyen de commande 12 et le moyen d'information 15.

Un procédé de protection contre les surtensions de l' équipement électrique 7 par le dispositif d'isolement 10a, mis en œuvre par le ou les programmes installés dans la carte électronique du moyen de commande 12 du système de l'invention 1a, va maintenant être décrit.

Préalablement à la mise en œuvre du procédé de protection, les contacts du premier moyen de coupure 9 sont chacun dans un état fermé permettant la connexion entre le conducteur d'alimentation d'installation 32i et le conducteur phase primaire 32e et la connexion entre le conducteur de retour d'alimentation d'installation 42i et le conducteur retour de phase 42e connecté au secteur, et le conducteur interne terre 6i de la ligne de terre 6 est connectée au piquet de terre 8 par le contact fermé du moyen de coupure de la ligne de terre 11. L'équipement électrique 7 est ainsi alimenté électriquement par ledit réseau d'alimentation extérieur 2e par le biais du réseau d'alimentation électrique intérieur 2i et les interrupteurs des moyens de coupure 9 et 11 chacun à l'état fermé.

Dans cet exemple, les contacts du moyen de coupure 10 sont aussi dans un état fermé.

Le procédé comprend une étape de réception dans laquelle les moyens de surveillance 13 recueillent périodiquement des données météorologiques ou des données de capteur renseignant sur la proximité d'un orage. A partir de ces données de surveillance, le procédé comprend une étape de détection d'un risque d'orage par les moyens de surveillance de risque d'orage. L'étape de détection comprend dans cet exemple une sous étape d'analyse des données recueillie, une sous étape de détermination dans laquelle les moyens de surveillance 13 déterminent un niveau de risque d'orage à partir de ces données de surveillance et une sous étape de comparaison dans laquelle les moyens de surveillance 13 comparent ce niveau de risque déterminé avec un niveau de risque seuil enregistré dans un espace de mémoire du moyens de surveillance 13 ou des moyens de commande 12 communiquant ce risque de seuil. De manière non limitative, ce niveau de risque seuil correspond à l'émission d'un éclair à une distance de 10 kilomètres du réseau câblé 2 auquel l'équipement électrique 7 et/ou l'équipement de télécommunications 14 sont reliés.

Si le niveau de risque déterminé devient supérieur au niveau de risque seuil, ce qui signifie selon l'exemple ci-dessus qu'un éclair a été détecté à une distance inférieure à 10 kilomètres, alors le procédé comprend en outre une étape d'envoie dans laquelle les moyens de surveillance 13 envoient la détection de risque d'orage aux moyens de commande 12.

Le procédé comprend dans cet exemple, à la suite d'une étape de réception de la détection de risque d'orage, une étape d'envoi dans laquelle les moyens de commande 12 génèrent et envoient vers le dispositif d'affichage 15 un message informant de la proximité d'un orage et de la déconnexion imminente de l'équipement électrique 7 du réseau câblé 2, et le cas échéant de l'équipement de télécommunications 14 dudit réseau câblé 2. Il est à noter que tant que le risque déterminé reste inférieur au risque seuil, alors le système de protection 1a reste en veille, ce qui permet d'économiser l'énergie électrique consommée par ledit système de protection 1a.

Le procédé comprend dans cet exemple une étape de déclenchement dans laquelle les moyens de commande 12 déclenchent alors une temporisation, à l'issue de laquelle le procédé comprend une étape de génération d'une commande de déconnexion électrique de l'équipement dans laquelle les moyens de commande 12 génèrent une commande d'isolement, appelé aussi commande de déconnexion électrique, une fois la temporisation écoulée.

La commande de déconnexion électrique de l'équipement électrique 7 dans cet exemple est expliquée ci-dessous.

Une fois cette commande générée, le procédé comprend une étape d'ouverture d'au moins une ligne principale, dans laquelle dans cet exemple les moyens de commande 12 pilotent en ouverture les interrupteurs du moyen de coupure 9 ouvrant respectivement les lignes de phase 3 et neutre 4 du réseau primaire. Le réseau d'alimentation électrique intérieur 2i est donc déconnecté du réseau de distribution extérieur 2e, de manière à déconnecter électriquement les conducteurs phase primaire 32e et retour de phase 42e respectivement des conducteurs d'alimentation d'installation 32i et de retour d'alimentation d'installation 42i, et donc de déconnecter électriquement les bornes d'alimentation 73, 74 de l'équipement électrique 7 du secteur. Dans cet exemple, en outre, le procédé comprend une étape d'envoi de la commande d'ouverture au moyen de coupure 10 décrit ensuite pour ouvrir dans un premier temps la ligne de transmission des signaux 5 et dans un deuxième temps la seconde ligne de terre 60.

Suite à cette étape d'ouverture de ligne principale, dans cet exemple le procédé comprend une étape vérification d'ouverture de l'au moins une ligne principale, en l'occurrence les lignes 3, 4 dans laquelle dans cet exemple le premier dispositif de vérification 22 mesure une valeur électrique de la ligne de phase primaire 3 et de la ligne neutre primaire 4, laquelle mesure est alors interprétée par les moyens de commande 12 pour vérifier l'ouverture des première et deuxième lignes principales 3, 4, c'est-à-dire contrôler qu'il y a bien une déconnexion électrique des conducteurs d'alimentation d'installation 32i et de retour d'alimentation d'installation 42i du secteur.

Si les moyens de commande 12 confirment la déconnexion, alors le procédé comprend une étape d'ouverture de la ligne de terre, dans laquelle ces derniers pilotent en ouverture l'interrupteur du moyen de coupure 11 de la ligne de terre 6 pour l'ouvrir et donc déconnecter le conducteur interne terre 6i du réseau d'alimentation électrique intérieur 2i, du conducteur externe terre 6e relié au piquet de terre 8, de manière à déconnecter la masse 76 de l'équipement électrique 7 du piquet de terre 8. Le procédé comprend ensuite une étape de vérification de l'ouverture de la ligne de terre 6 dans laquelle le second dispositif de vérification 23 mesure la résistance entre les deux bornes de l'interrupteur du moyen de coupure 11 pour vérifier la déconnexion entre la ligne de terre 6 et le piquet de terre 8, laquelle mesure est alors interprétée par les moyens de commande 12 pour vérifier la déconnexion de la ligne de terre 6.

Si les moyens de commande 12 confirment la déconnexion de la ligne de terre 6, le procédé comprend une étape d'envoi d'une donnée de confirmation de l'ouverture de la ligne de terre dans laquelle ces derniers envoient un message vers le dispositif d'affichage 15 pour informer l'utilisateur de la déconnexion de l'équipement électrique 7.

De manière avantageuse, le procédé déconnecte également l'équipement de télécommunications 14 du réseau de communication externe 56e pour le protéger des surtensions. Pour ce faire, et suite ou en même temps que la déconnexion ou la vérification de la déconnexion des première et deuxième lignes principales 3, 4 du réseau câblé 2, les moyens de commande 12 pilotent en ouverture les interrupteurs de la ligne de transmission des signaux 5 (c'est à dire la troisième ligne principale du réseau câblé) déconnectant l'équipement de télécommunications 14 du réseau de communication externe 56e puis de l'ouverture de la seconde ligne de terre 60. Le message envoyé et indiquant la déconnexion de l'équipement électrique 7 indiquera également la déconnexion de l'équipement de télécommunications 14.

De manière alternative, le moyen d'affichage 15 est intégré dans une interface homme machine 33, pour permettre à l'utilisateur d'interagir avec les moyens de commande 12. Dans ce cas, lorsque les moyens de commande 12 envoient vers le dispositif d'affichage 15 l'information de déconnexion imminente des équipements électriques 7 et de télécommunication 14, les moyens de commande 12 invitent également l'utilisateur à accepter ou à refuser cette déconnexion avant l'écoulement de la temporisation.

Si l'utilisateur refuse la déconnexion, alors le procédé de protection selon l'invention est stoppé par les moyens de commande 12 et le moyen de commande 12 n'envoie donc pas de commande de déconnexion électrique de l'équipement électrique 7. Les moyens de commande 12 comprend une temporisation utilisateur qu'ils déclenchent, par exemple trente minutes et à la fin de cette temporisation les moyens de commande 12 revient l'étape de détection d'un risque d'orage.

Si l'utilisateur accepte la déconnexion, ou si l'utilisateur n'a pas interagi avec l'interface homme machine 33 une fois la temporisation écoulée, alors les moyens de commande 12 génèrent la commande de déconnexion de l'équipement électrique 7 au réseau câblé 2 décrit préalablement.

Le système 1a et le procédé de protection de l'invention permettent donc, une fois un risque d'orage détecté, de déconnecter les équipements électriques 7, 14 du réseau câblé 2 selon une séquence déterminée, c'est-à-dire les lignes principales 3, 4, 5 dans un premier temps, puis la ligne de terre 6 dans un second temps. De la sorte, il n'y a aucun risque de détérioration des équipements électriques 7, 14 par les surtensions, et l'utilisateur est protégé de toute électrocution durant la déconnexion.

Le système de protection 1a est également agencé pour reconnecter les équipements électriques 7 et de télécommunications 14 une fois l'orage passé.

Pour ce faire, le procédé comprend une étape de détection d'une fin de risque d'orage dans laquelle les moyens de surveillance 13 déterminent un autre risque d'orage à partir des données météo ou de capteurs provenant des moyens de surveillance 13. Si cet autre risque déterminé devient inférieur à un second risque seuil enregistré dans l'espace mémoire, alors le procédé comprend une étape de génération et d' envoi d'une commande de reconnexion de l'équipement électrique, au dispositif d'isolement 10a, dans laquelle les moyens de commande 12 reçoivent l'information et génèrent une commande de reconnexion du ou des équipements 7, 14 au dispositif d'isolement 10a. A titre d'exemple, ce second risque seuil correspond à la détection d'un éclair à une distance de 12 kilomètres.

Une fois cette commande générée, le procédé comprend, dans un premier temps une étape de fermeture de la ligne de terre du réseau câblé dans laquelle les moyens de commande 12 pilotent d'abord la fermeture de l'interrupteur du moyen de coupure 11 reliant la ligne de terre 6 au piquet de terre 8, pour reconnecter la masse 76 de l'équipement électrique 7 au piquet de terre 8.

Dans un deuxième temps, dans cet exemple, le procédé comprend une étape de vérification que la ligne de terre est fermée dans laquelle le second dispositif de vérification 23 mesure alors la résistance de la ligne de terre 6, laquelle mesure est interprétée par les moyens de commande 12 pour vérifier la connexion de la ligne de terre 6 au piquet de terre 8.

Si les moyens de commande 12 confirment la connexion, dans un troisième temps, dans cet exemple, le procédé comprend une étape de fermeture de l'au moins une ligne principale, en l'occurrence la ligne de phase primaire 3, la ligne neutre primaire 4 et en outre dans cet exemple la ligne principale de communication 5. Dans cette étape les moyens de commande 12 pilotent la fermeture des interrupteurs du moyen de coupure 9 de ligne principale reliant le conducteur d'alimentation d'installation 32i au conducteur phase primaire 32e de la ligne de phase primaire 3 et le conducteur de retour d'alimentation d'installation 42i au conducteur retour de phase 42e de la ligne neutre primaire 4, pour reconnecter les bornes d'alimentation 73, 74 de l'équipement électrique 7 au réseau d'alimentation extérieur 2^{e} et en outre en l'occurrence dans cet exemple la fermeture des interrupteurs du moyen de coupure 10.

Dans un quatrième temps, dans cet exemple, le procédé comprend une étape de vérification de la fermeture de l'au moins une ligne principale, dans laquelle le premier dispositif de vérification 22 mesure alors la résistance des lignes de phase primaire 3 et neutre primaire 4, laquelle mesure est interprétée par les moyens de commande 12 pour vérifier la connexion desdites lignes de phase primaire 3 et neutre primaire 4.

Le procédé comprend enfin une étape d'envoi de confirmation de la connexion de l'au moins une ligne principale vers un dispositif d'affichage, dans laquelle les moyens de commande 12 envoient enfin un message vers le dispositif d'affichage 15 pour informer l'utilisateur de la reconnexion de l'équipement électrique 7, et le cas échéant de l'équipement de télécommunications 14.

En respectant cette séquence de reconnexion, l'utilisateur est protégé de toute électrocution durant la reconnexion de l'équipement électrique 7 et le cas échéant de l'équipement de télécommunication 14.

Selon un autre exemple, les moyens de commande 12 comprennent les moyens de surveillance 13.

Selon un autre exemple, dans lequel le dispositif d'isolement 10a comprend les moyens de coupure 9 et 11 ou/et le moyen de coupure 10, le dispositif d'isolement 10a est configuré pour, par suite d'une commande d'isolement de l'équipement du réseau câblé provenant d'un moyen de commande, de commander l'unité d'isolement puissance 100a tel que les moyens de coupures successivement ouvre l'au moins une ligne principale du réseau câblé 2, et ensuite ouvre la ligne de terre 6 du réseau câblé 2. Ainsi, le dispositif d'isolement 10a permet de recevoir une commande notamment en cas de détection d'un risque d'orage et ainsi d'ouvrir les lignes principales 3, 4 avant la ligne de terre 6 afin d'éviter une période de temps des équipements électrique reliés aux réseaux sans être reliés à la ligne de terre. Dans cet exemple, le dispositif d'isolement reçoit donc une commande d'isolement et est autonome pour réaliser les étapes successives d'ouverture de ligne principale et de ligne de terre. Dans cette variante, le dispositif d'isolement n'est donc pas commandé par différente commande successive par les moyens de commande 12 mais uniquement par une commande d'isolement. Par exemple, dans le cas de la figure 1, le moyen de coupure 10 étant configuré pour ouvrir successivement la ligne principale 5 et ensuite la ligne de terre 60, la commande d'isolement envoyée par les moyens de commande 12 permettent d'actionner l'ouverture sans envoyer différentes commandes. Dans cet exemple, les étapes de fermetures successives de la ligne de terre et de l'au moins une ligne principale peuvent aussi être configuré par le dispositif d'isolement 10a. Le dispositif d'isolement 10a peut être aussi en outre configuré pour produire les étapes de vérifications d'ouverture et fermeture de l'au moins une ligne principale et de terre.

Le dispositif d'isolement 10a peut comprendre un boitier comprenant un rail pour être disposé dans une armoire électrique.

Le moyen de commande 12 peut être alimenté par un autre réseau externe relié au secteur et/ou peut contenir une source secondaire telle qu'une batterie pour alimenter la carte du moyen de commande 12.

En référence à la figure 2, le système de protection 1b contre les surtensions va être décrit selon un second mode de réalisation.

Le réseau câblé 2b est identique au réseau câblé 2 du premier mode de réalisation sauf en ce qu'il ne comprend pas le réseau de communication 56 mais comprend en outre un réseau d'alimentation électrique secondaire 17 adapté à être relié au réseau électrique intérieure 2i. le réseau de communication 56 comprend une ligne de phase secondaire 173 adaptée à être reliée au conducteur d'alimentation d'installation 32i de la ligne de phase primaire 3 du électrique intérieure 2i. et une ligne neutre secondaire 174 adaptée à être reliée au conducteur de retour d'alimentation d'installation 42i de la ligne neutre primaire 4 du réseau électrique intérieure 2i. Le système de protection 1b comprend un dispositif d'isolement 10b différent du dispositif d'isolement 10a du système de protection 1a du premier mode de réalisation notamment en ce qu'il ne comprend pas de moyen de coupure 10 de la ligne de transmission des signaux et en ce qu'il comprend en outre des caractéristiques du dispositif d'isolement 10a décrit ci-dessous.

L'équipement électrique 7 à protéger est sélectivement relié par le biais du réseau électrique intérieure 2i au réseau électrique extérieur 2e décrit précédemment et au réseau d'alimentation électrique secondaire 17.

Ce réseau secondaire 17 est relié à une source d'alimentation secondaire 27, par exemple un ensemble comprenant un onduleur et une batterie ou un groupe électrogène, pour permettre de continuer à alimenter en électricité l'équipement électrique 7 en cas de déconnexion du réseau électrique extérieur 2e à la suite de la détection d'un risque d'orage.

En plus des éléments décrit précédemment en relation avec la figure 1, le dispositif d'isolement 10b du système de protection 1b comprend un deuxième moyen de coupure 26 pour connecter le réseau secondaire 17 au réseau électrique intérieure 2i, par exemple formé par deux interrupteurs (non représentés sur la figure 2 mais dont les contacts sont représentés dans les figures suivantes) pilotés par les moyens de commande 12 et agencés respectivement d'une part entre la ligne de phase secondaire 173 et le conducteur d'alimentation d'installation 32i pour connecter ou déconnecter la source d'alimentation secondaire 27 au conducteur d'alimentation d'installation 32i et d'autre part entre la ligne neutre secondaire 172 et conducteur de retour d'alimentation d'installation 42i pour connecter ou déconnecter la source d'alimentation secondaire 27 au conducteur de retour d'alimentation d'installation 42i.

En outre le dispositif d'isolement 10b comprend un moyen d'inversion 20 pouvant connecter ou déconnecter la ligne interne terre 6i au conducteur de retour d'alimentation d'installation 42i. Le dispositif d'isolement 10b comprend dans cet exemple en outre un troisième dispositif de vérification 24 de la connexion du réseau secondaire 17 au réseau d'alimentation électrique intérieur 2i, par exemple un dispositif de vérification de la position des contacts 264, 263 du moyen de coupure 26 , par exemple un ampèremètre sur chaque branche ou un moyen électromécanique ou mécanique du moyen de coupure 26 vérifiant l'état des contacts. Le troisième dispositif de vérification 24 peut aussi être remplacé par le dispositif de vérification 22 dans le cas où ce dernier est un voltmètre entre le conducteur de retour d'alimentation d'installation 42i et le conducteur d'alimentation d'installation 32i. Cependant, dans cet exemple, l'avantage par rapport à l'exemple ayant un seul dispositif de vérification 22 ou 24 de type tension est que le troisième dispositif de vérification 24 permet la vérification de la position des contacts 264, 263 et ainsi de connaitre et de garantir quelle est la source d'alimentation (principale ou secondaire). Selon un autre exemple le dispositif de vérification 22 est un dispositif de vérification de la position des contacts 93, 94 du moyen de coupure 9 et le dispositif de vérification 24 peut alors être un voltmètre ou encore le dispositif de vérification de la position des contacts 263, 263.

Le dispositif d'isolement 10b comprend donc le moyen de coupure 9 de ligne principale, le moyen de coupure 11 et en outre par rapport à celui du dispositif d'isolement 10a, le moyen d'inversion 20 de la ligne de terre 6. Le moyen d'inversion 20 de la ligne de terre 6, sont par exemple un interrupteur du type sélectionneur ou contacteur ou sectionneur piloté par les moyens de commande 12. Ce moyen d'inversion 20 permet de sélectivement relier la conducteur interne terre 6i de la ligne de terre 6 au moyen de coupure 11 ou à la ligne neutre secondaire 174. Dans cet exemple l'interrupteur du moyen d'inversion 20 est un sélectionneur commandé à deux positions et la ligne de terre 6 comprend un conducteur intermédiaire 6m entre le moyen d'inversion 20 et le moyen de coupure 11. Selon un autre exemple, le moyen d'inversion 20 de la ligne de terre 6, sont un interrupteur à simple contact (deux bornes), par exemple un contacteur ou sectionneur commandé reliant le conducteur interne terre 6i au conducteur retour d'alimentation d'installation 42i.

Enfin, le dispositif d'isolement 10b du système de protection 1b comprend en outre par rapport à celui du dispositif d'isolement 10, un quatrième dispositif de vérification 25 de la connexion de la ligne de terre 6 au conducteur de retour d'alimentation d'installation 42i, par exemple un ohmmètre pour vérifier la connexion du réseau de terre interne avec le réseau de neutre de la source secondaire lorsque le moyen de coupure 26 est dans un état fermé. Cela permet ainsi de s'assurer que le régime du réseau secondaire comprend le neutre relié à la terre.

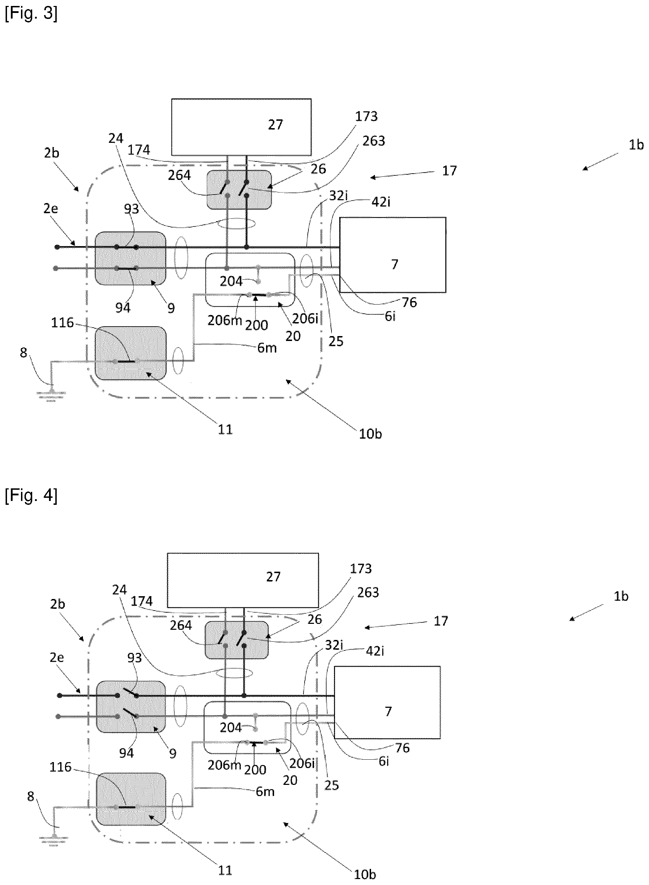

En référence aux figures 3 à 11, le procédé de protection mis en œuvre par le système de protection 1b selon le second mode de réalisation va maintenant être décrit. Dans ces figures, les moyens de commande 12, les moyens de surveillance 13 et les moyens d'information 15 ne sont pas représentés. Les interrupteurs des moyens de coupures 9, 11, 26 et d'inversion 20 sont représentés.

Le moyen de coupure 9 de ligne principale comprend l'interrupteur comprenant un contact 94 pour ouvrir ou fermer la ligne neutre 4 et l'interrupteur comprenant un contact 93 pour ouvrir ou fermer la ligne 3. Chaque interrupteur comprend en outre une première borne et une deuxième borne qui sont reliées chacune à respectivement un conducteur du côté du réseau interne 2i de la ligne correspondante et un conducteur du côté du réseau externe 2e.

Le moyen de coupure 11 de terre comprend l'interrupteur comprenant un contact 116 pour ouvrir ou fermer la ligne de terre 6.

Le deuxième moyen de coupure 26 comprend l'interrupteur comprenant un contact 264 entre la ligne neutre secondaire 174 et conducteur de retour d'alimentation d'installation 42i et l'interrupteur comprenant un contact 263 entre la ligne de phase secondaire 173 et le conducteur d'alimentation d'installation 32i.

Le moyen d'inversion 20 comprend l'interrupteur 200 comprenant une borne 206i reliée au conducteur intérieur 6i, une borne 206m reliée au conducteur intermédiaire 6m, une borne 204 reliée au conducteur retour d'alimentation d'installation 42i et un contact permettant dans une première position mise à la terre de relier la borne 206i à la borne 206m et une deuxième position de mise au neutre relier la borne 206i à la borne 204.

La figure 3 illustre l'état du réseau câblé 2b préalablement à la mise en œuvre du procédé, c'est-à-dire préalablement à la détection d'un risque d'orage supérieur au risque seuil. Dans ce cas, le réseau secondaire 17 est donc déconnectée du conducteur d'alimentation d'installation 32i et du conducteur de retour d'alimentation d'installation 42i, et l'équipement électrique 7 est relié au réseau extérieur 2e via le réseau d'alimentation électrique intérieur 2i. Dans la figure 3, les contacts 94 et 93 du moyen de coupure 9 sont fermés, les contacts 264 et 263 du deuxième moyen de coupure 26 sont ouverts, et la masse 76 de l'équipement électrique 7 est reliée à la ligne de terre 6 en ayant l'interrupteur 200 dans la position mise à la terre.

La figure 4 illustre la première étape du procédé à la suite de la détection d'un risque d'orage supérieur au risque seuil. Cette étape correspond à l'étape d'ouverture d'au moins une ligne principale du procédé comprenant une sous étape d'ouverture du premier contact 93 entre le conducteur phase primaire 32e et le conducteur d'alimentation d'installation 32i et une sous étape d'ouverture du deuxième contact 94 entre le conducteur phase retour 42e et le conducteur de retour d'alimentation d'installation 42i. Les deux sous étapes étant effectué avant l'ouverture de la ligne de terre 6 du réseau câblé 2 par le moyen de coupure 11 de terre. Dans cette étape d'ouverture le moyen de coupure ouvre la ligne de phase primaire 3 et ouvre la ligne neutre primaire 4 du réseau primaire 16 décrites ci-dessus, de manière à déconnecter l'équipement électrique 7 du réseau d'alimentation extérieur 2e. Dans cette première étape, les moyens de commande 12 commandent donc l'ouverture des contacts 93 et 94 du moyen de coupure 9.

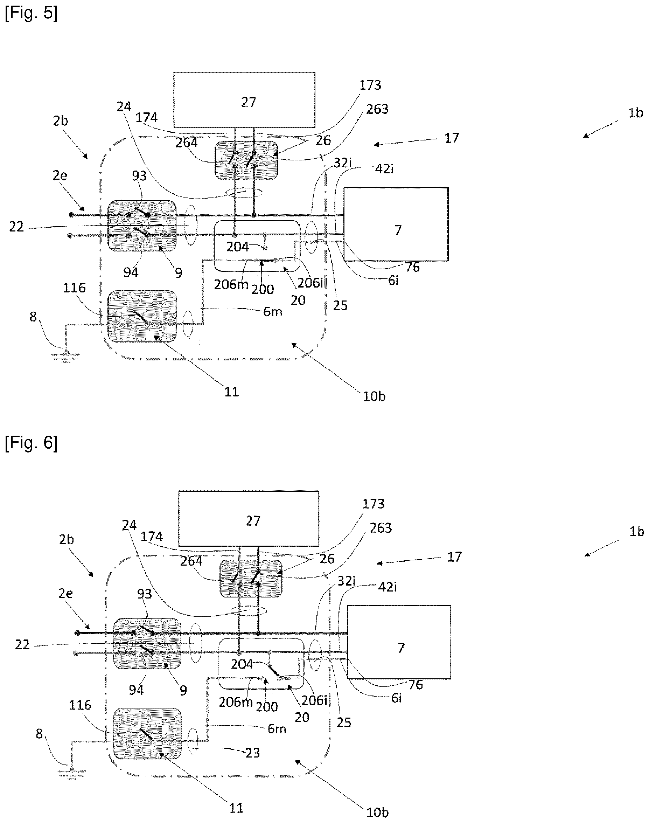

La figure 5 illustre, l'étape d'ouverture de la ligne de terre, suite à l'étape vérification d'ouverture de l'au moins une ligne principale par le premier dispositif de vérification 22 de la déconnexion des première et deuxième lignes principales 3, 4. Dans cette étape d'ouverture de la ligne de terre, le moyen de commande 12 commande l'actionnement du contact 116 du moyen de coupure 11 pour ouvrir la ligne de terre 6 afin de déconnecter la masse 76 de l'équipement électrique 7 du piquet de terre 8.

La figure 6 illustre, suite à l'étape de vérification de l'ouverture de la ligne de terre 6 par le second dispositif de vérification 23 de l'ouverture de la ligne de terre 6, une étape actionnement du moyen d'inversion 20 depuis sa première position vers sa deuxième position dans laquelle les moyens de commande 12 commande le changement de position de l'interrupteur 200 de manière à inverser la connexion de la masse 76 de l'équipement électrique 7, en reliant la conducteur retour d'alimentation d'installation 42i par le biais du conducteur interne terre 6i à la masse 76. Dans cet exemple, l'interrupteur 200 déconnecte le conducteur intermédiaire 206m mais pourrait comme décrit plus haut être un simple interrupteur comprenant un contact entre la borne 204 et la borne 206i (la borne 206m serait confondu avec la borne 206i).

Le procédé comprend en outre une étape de vérification de la connexion du conducteur retour d'alimentation d'installation 42i de la ligne neutre 4 au conducteur interne terre 6i par le quatrième dispositif de vérification 25 permettant ainsi de vérifier la connexion de la masse 76 de l'équipement électrique 7 au conducteur retour d'alimentation d'installation 42i.

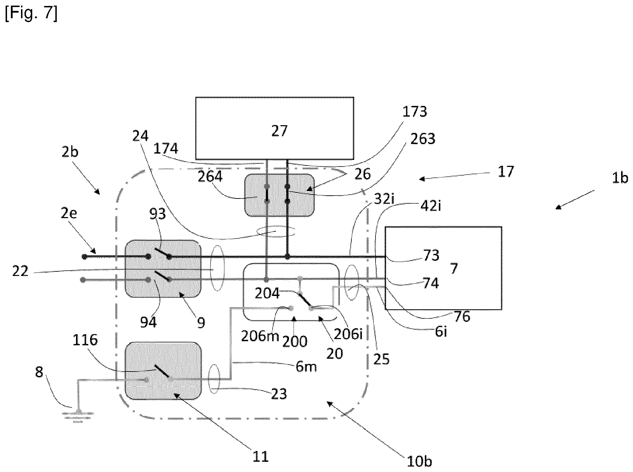

La figure 7 illustre, à la suite de l'étape de vérification de la connexion du conducteur retour d'alimentation d'installation 42i de la ligne neutre 4 au conducteur interne terre 6i, une étape de fermeture du premier et deuxième contacts 263, 264 du moyen de coupure 26 entre d'une part la ligne de phase secondaire 173 et le conducteur d'alimentation d'installation 32i et d'autre part la ligne neutre secondaire 174 du réseau secondaire 26 et le conducteur retour d'alimentation d'installation 42i.

Dans cette étape de fermeture, les moyens de commande 12 commande la fermeture des contacts 264 et 263 du deuxième moyen de coupure 26 de manière à connecter les moyens d'alimentation secondaire 27, aux bornes d'alimentation 74, 73 de l'équipement électrique 7.

Le procédé comprend une étape de vérification de la connexion des conducteurs d'alimentation d'installation 32i et retour d'alimentation d'installation 42i aux moyens d'alimentation secondaire 27. Dans cette étape, les moyens de commande 12 vérifient alors, via le dispositif de vérification 22 ou le dispositif de vérification 24, la connexion de l'équipement électrique 7 au réseau secondaire 17.

Le procédé de l'invention permet non seulement de déconnecter les équipements électriques 7 du réseau câblé 2 selon une séquence déterminée en cas de détection d'orage, mais également de connecter les équipements électriques 7 à une source d'alimentation secondaire 27 via un réseau secondaire 17 tant que le risque d'orage demeure supérieur au second risque seuil, de sorte que l'utilisateur puisse bénéficier des fonctionnalités de ses équipements 7 en toute sécurité, même en cas d'orage et de risque de surtensions.

Le système de protection 1b selon le second mode de réalisation est également agencé pour reconnecter les équipements électriques 7 au réseau extérieur 2e du réseau câblé 2 une fois l'orage passé.

Pour ce faire, les moyens de commande 12 déterminent comme dans le premier mode de réalisation, un autre risque d'orage à partir des données météo ou de capteurs provenant des moyens de surveillance 13. Si cet autre risque déterminé devient inférieur au second risque seuil enregistré dans l'espace mémoire des moyens de commande 12, alors ces derniers génèrent une commande de reconnexion du ou des équipements 7 au réseau extérieur 2e.

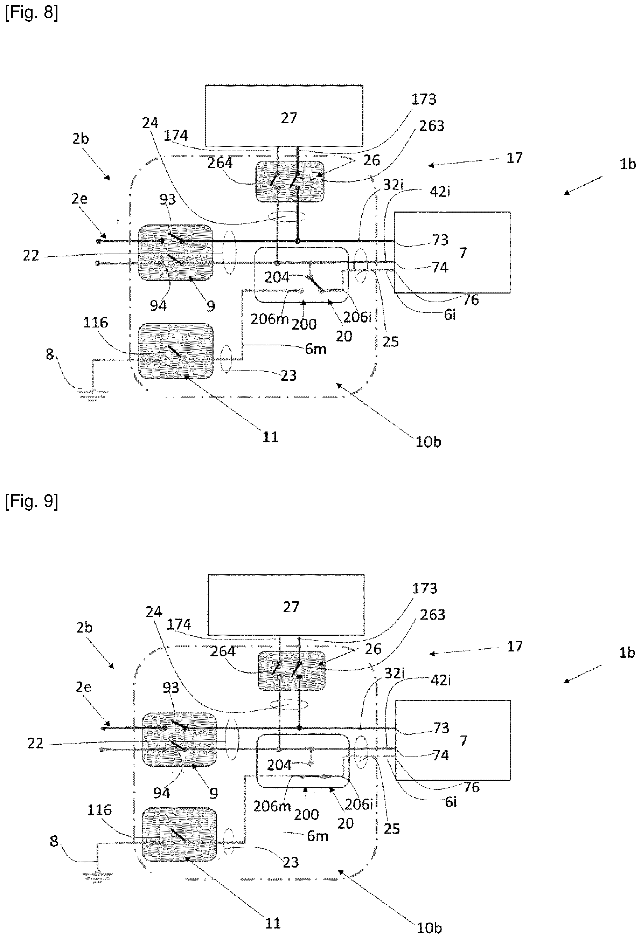

En référence à la figure 8, le procédé comprend une étape de déconnexion du réseau secondaire dans laquelle les moyens de commande pilotent l'ouverture des contacts 264 et 263 pour déconnecter les bornes 73, 74 de l'équipement électrique 7 du réseau secondaire 17.

Le procédé comprend ensuite une étape de vérification de la déconnexion du réseau secondaire dans laquelle le troisième dispositif de vérification 24 ou le premier dispositif de vérification 22 vérifie la déconnexion de l'équipement électrique 7 des lignes de phase et neutre secondaires174, 173.

En référence à la figure 9, et à la suite de la vérification, le procédé comprend ensuite une étape d'inversion en première position dans laquelle les moyens de commande 12 pilotent l'interrupteur 200 dans la première position pour inverser la connexion de la masse 76 de l'équipement électrique 7, de manière à relier le conducteur interne terre 6i.au conducteur intermédiaire 6m de la ligne de terre 6.

Le procédé comprend ensuite une étape de vérification de la connexion de la masse 76 au conducteur intermédiaire 6m dans laquelle le quatrième dispositif de vérification 25 vérifie avec le dispositif de vérification 23 la connexion du conducteur intermédiaire 6m au conducteur interne terre 6i.

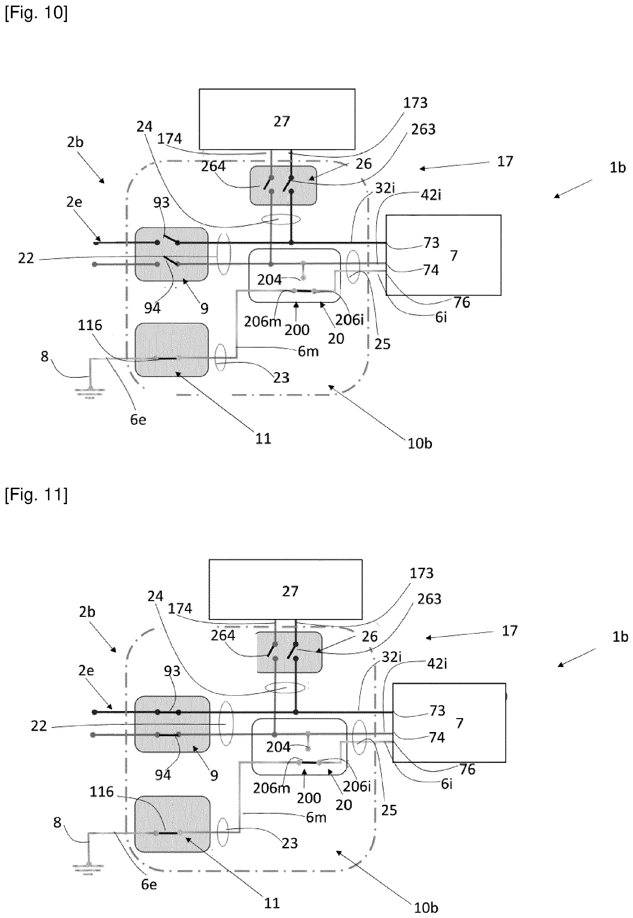

En référence à la figure 10, et à la suite de la vérification de la connexion, le procédé comprend ensuite l'étape de fermeture de la ligne de terre, dans laquelle les moyens de commande 12 actionnent le contact 116 pour fermer la ligne de terre 6, de manière à reconnecter la masse 72 de l'équipement électrique 7 au piquet de terre 8.

Le procédé comprend ensuite l'étape de vérification de la reconnexion du conducteur interne terre 6i au conducteur externe terre 6e, par le deuxième dispositif de vérification 23.

En référence à la figure 11, et à la suite de la vérification de la reconnexion, le procédé comprend l'étape de fermeture de l'au moins une ligne principale, dans laquelle les moyens de commande 12 pilotent la fermeture des contacts 93, 94 pour fermer la ligne de phase primaire 3 et la ligne neutre primaire 4 et relier le réseau intérieur 2i au réseau extérieur 2e, pour in fine reconnecter les bornes d'alimentation 73, 74 de l'équipement électrique 7 aux réseau extérieur 2e. Le premier dispositif moyen de vérification 22 vérifie alors la bonne reconnexion des bornes 73, 74 de l'équipement électrique 7 au réseau extérieur 2e.

En plus d'offrir une protection contre les surtensions plus fiable, plus efficace et plus sécuritaire, le système de protection 1a, 1b de l'invention peut être intégré à différents endroits du réseau câblé 2, aussi bien en tête de l'installation qu'au niveau des points terminaux.

A titre d'exemple le système de protection 1a, 1b peut être intégré au niveau du disjoncteur général. Il peut également être installé de manière modulaire dans le tableau de distribution et le cas échéant dans le tableau de communication ou le boitier de répartition téléphonique. Enfin, le système de protection 1a, 1b peut également être intégré dans une prise électrique, une multiprise ou une prise de télécommunication du type RJ45, RJ11 ou F-010.

## Revendications

1. Procédé de protection d'un équipement électrique (7,14) relié à un réseau câblé (2) comprenant au moins une ligne principale (3, 4, 5) dans laquelle un courant électrique est apte à circuler, et une ligne de terre (6) reliée à un dispositif de mise à la terre (8), lequel procédé est mis en œuvre par un système de protection (1a, 1b) contre les surtensions comprenant:
a. un dispositif d'isolement (10a, 10b) comprenant au moins un moyen de coupure de ligne principale (9, 10) pour ouvrir l'au moins une ligne principale (3, 4, 5) et un moyen de coupure de terre (11) pour ouvrir la ligne de terre (6) du réseau câblé (2),
b. des moyens de commande (12) desdits moyens de coupure (9, 10, 11) et
c. des moyens de surveillance (13) de risque d'orage reliés aux moyens de commande (12),
le procédé comprenant les étapes successives de:
a. détection d'un risque d'orage par les moyens de surveillance (13) de risque d'orage;
b. génération et envoie par les moyens de commande (12) d'une commande de déconnexion électrique de l'équipement (7, 14) à la suite de la détection d'un risque d'orage, au dispositif d'isolement (10a);
c. ouverture de l'au moins une ligne principale (3, 4, 5) du réseau câblé (2) par l'au moins un moyen de coupure (9, 10) de la ligne principale, et
d. après la mise en œuvre de cette étape d'ouverture de l'au moins une ligne principale, l'ouverture de la ligne de terre (6) du réseau câblé (2) par le moyen de coupure (11) de terre.

2. Procédé de protection selon la revendication précédente, **caractérisé en ce que** la détection d'un risque d'orage préalable à la génération de la commande de déconnexion est réalisée selon les sous-étapes suivantes:
a. analyse de données recueilli par les moyens de surveillance (13) ;
b. détermination d'un niveau de risque d'orage à partir des données de surveillance ;
c. comparaison du niveau de risque déterminé avec un niveau de risque seuil ;
d. si le niveau de risque déterminé dépasse le niveau de risque seuil, génération de la commande de déconnexion par les moyens de commande (12).

3. Procédé selon la revendication 1 ou 2, **caractérisé en ce qu'**il comprend, préalablement à l'étape d'ouverture de la ligne de terre (6), une étape de vérification d'ouverture de l'au moins une ligne principale (3, 4) et **en ce que** l'étape d'ouverture de la ligne de terre (6) est effectuée si et seulement si la vérification de l'au moins une ligne principale ouverte est confirmée.

4. Procédé selon la revendication 2 ou 3, **caractérisé en ce qu'**il comprend en outre les étapes successives de :
a. envoi par les moyens de commande d'un message de déconnexion électrique imminente de l'équipement (7, 14) vers des moyens d'information (15) ;
b. déclenchement d'une temporisation ;
c. envoi d'une commande de déconnexion de l'équipement (7, 14) une fois la temporisation écoulée au dispositif d'isolement (10a, 10b).

5. Procédé selon l'une quelconque des revendications précédentes, **caractérisé en ce qu'**il comprend les étapes supplémentaires successives de :
a. envoi d'une commande de reconnexion de l'équipement (7, 14) à un réseau extérieur (2e) du réseau câblé (2) à la suite de la détection par les moyens de surveillance (13) d'une fin de risque d'orage;
b. fermeture de la ligne de terre (6) du réseau câblé (2),
c. et après la mise en œuvre de cette étape de fermeture de la ligne de terre, la fermeture de la ligne principale (3, 4, 5) du réseau câblé (2).

6. Procédé selon l'une quelconque des revendications précédentes, dans lequel le réseau câblé (2) comprend un réseau d'alimentation électrique primaire comprenant un réseau d'alimentation électrique intérieur (2i), un réseau électrique extérieur (2e) reliés l'un à l'autre par le biais d'un moyen de coupure de ligne principale (9) et en ce que le réseau d'alimentation électrique primaire comprend:
a. une ligne de phase primaire (3) formant une première ligne principale, comprenant un conducteur phase primaire (32e) et un conducteur d'alimentation d'installation (42e) reliés ensemble par le moyen de coupure (9) de ligne principale comprenant un premier contact (93) dans un état fermé,
b. une ligne neutre primaire (4) formant une deuxième ligne principale comprenant un conducteur retour de phase primaire (32e) et un conducteur de retour d'alimentation d'installation (32i) reliés ensemble par le moyen de coupure (9) de ligne principale comprenant un deuxième contact (94) dans un état fermé, et
c. la ligne de terre (6), comprenant un conducteur externe terre (6e) et un conducteur interne terre (6i) reliés ensemble par le moyen de coupure de terre (11),
• et dans lequel l'étape d'ouverture de l'au moins une ligne principale du réseau câblé par le moyen de coupure (9) de ligne principale comprend:
i. une sous étape d'ouverture du premier contact (93) entre le conducteur phase primaire (32e) et le conducteur d'alimentation d'installation (32i) et
ii. une sous étape d'ouverture du deuxième contact (94) entre le conducteur phase retour (42e) et le conducteur de retour d'alimentation d'installation (42i),
iii. les deux sous étapes étant effectuées avant l'étape d'ouverture de la ligne de terre (6) du réseau câblé (2) par le moyen de coupure (11) de terre.

7. Procédé selon la revendication précédente dans lequel le dispositif d'isolement (10b) comprend :
a. un deuxième moyen de coupure (26), comprenant un premier contact (263) dans un état ouvert et un deuxième contact (264) dans un état ouvert,
b. un moyen d'inversion (20) de la ligne de terre (6) commandé par les moyens de commande (2) et actionnable entre une première position mise à la terre reliant un conducteur interne terre (6i) de la ligne de terre (6) destinée à être reliée à la masse (76) d'un équipement au moyen de coupure (11) de la ligne terre (6) et une deuxième position de mise au neutre du conducteur interne terre (6i) au conducteur de retour d'alimentation d'installation (42i),
dans lequel le réseau d'alimentation primaire est un réseau phase-neutre, dans lequel la deuxième ligne principale (4) est un neutre et en ce que le réseau câblé (2) comprend en outre un réseau d'alimentation secondaire (17) comprenant :
i. une ligne de phase secondaire (173) destinée à être reliée au conducteur d'alimentation d'installation (34i) par le premier contact (263) du deuxième moyen de coupure (26), et
ii. une ligne neutre secondaire (174) destinée à être reliée au conducteur de retour d'alimentation d'installation (42i) par le deuxième contact (264) du deuxième moyen de coupure (26) le procédé comprend, à la suite de l'étape d'ouverture de la ligne de terre (6) du réseau primaire, les étapes successives de :
c. actionnement du moyen d'inversion (20) depuis sa première position vers sa deuxième position, et
d. fermeture du premier et deuxième contact (264, 263) du deuxième moyen de coupure (26) entre d'une part la ligne de phase secondaire (173) et le conducteur d'alimentation d'installation (32i) et d'autre part la ligne neutre secondaire (174) du réseau secondaire et le conducteur retour d'alimentation d'installation (42i).

8. Dispositif d'isolement (10a, 10b) adapté pour déconnecter un équipement électrique (7) relié à au moins un réseau câblé (2) comprenant au moins une ligne principale (3, 4, 5,) dans laquelle un courant électrique est apte à circuler et une ligne de terre (6, 60) reliée à un dispositif de mise à la terre (8), lequel dispositif d'isolement comprend :
a. au moins des moyens de coupure (9, 10, 11) d'au moins une ligne principale (3, 4, 5) et de la ligne de terre (6, 60), les moyens de coupures (9, 10, 11) étant adaptés à être connecté à des moyens de commande (12) desdits moyens de coupure (9, 10, 11), lequel dispositif d'isolement (10a, 10b) est configuré pour, suite à une commande d'isolement de l'équipement du réseau câblé, que les moyens de coupures (9, 10, 11) successivement ouvre l'au moins une ligne principale (9, 10, 11) du réseau câblé, et ensuite déconnecte la ligne de terre (6, 60) du réseau câblé(2).

9. Système de protection (1a, 1b) contre les surtensions, adapté pour déconnecter un équipement électrique (7, 14) relié à au moins un réseau câblé (2) comprenant au moins une ligne principale (3, 4, 5) dans laquelle un courant électrique est apte à circuler et une ligne de terre (6) reliée à un dispositif de mise à la terre (8), lequel système comprend
a. un dispositif d'isolement (10a, 10b) selon la revendication 8, dans lequel les moyens de coupure (9, 10, 11) de ligne principale et de la ligne de terre (6) sont situés entre un réseau d'alimentation électrique intérieur (2i) et un réseau extérieur (2e) du réseau câblé (2),
b. des moyens de commande (12) desdits moyens de coupure (9, 10, 11) et
c. des moyens de surveillance (13) du risque d'orage reliés aux moyens de commande (12),
**caractérisé en ce que** le système est configuré pour successivement envoyer une commande de déconnexion de l'équipement (7, 14) du réseau câblé (2) à la suite de la détection d'un risque d'orage, couper la ligne principale (3, 4, 5) du réseau câblé (2), et couper la ligne de terre (6) du réseau câblé (2).

10. Système (1a, 1b) selon la revendication précédente, **caractérisé en ce qu'**il comprend :
a. un premier dispositif de vérification (22) de la connexion et déconnexion de la ligne principale (3, 4) du réseau d'alimentation électrique intérieur (2i) au réseau extérieur (2e) du réseau câblé (2), le premier dispositif de vérification étant électriquement relié à la ligne principale (3, 4) et aux moyens de commande (12), et **en ce que** le moyen de commande (12) commande le moyen de coupure (11) de terre pour l'ouverture de la ligne de terre après confirmation de la déconnexion de la ligne principale du réseau d'alimentation électrique intérieur au réseau extérieur du réseau câblé.

11. Système (1a, 1b) selon la revendication 9 ou 10, **caractérisé en ce qu'**il comprend des moyens d'information (15) du type écran d'affichage reliés aux moyens de commande (12) et adaptés pour recevoir et afficher un message de déconnexion imminente de l'équipement (7, 14) du réseau câblé (2).

12. Système (1b) selon l'une quelconque des revendications 9 à 11, dans lequel le réseau câblé (2) comprend un réseau d'alimentation électrique primaire (16) comprenant un réseau d'alimentation électrique intérieur (2i), un réseau électrique extérieur (2e) reliés l'un à l'autre par le biais du moyen de coupure (9) de ligne principale et en ce que le réseau d'alimentation électrique primaire comprend:
a. une ligne de phase primaire (3) formant une première ligne principale (3), comprenant un conducteur phase primaire (32e) et un conducteur d'alimentation d'installation (42e) reliés ensemble par le moyen de coupure (9) de ligne principale comprenant un premier contact (93) dans un état fermé,
b. une ligne neutre primaire (4) formant une deuxième ligne principale comprenant un conducteur retour de phase primaire (32e) et un conducteur de retour d'alimentation d'installation (32i) reliés ensemble par le moyen de coupure (9) de ligne principale comprenant un deuxième contact (94) dans un état fermé,
c. la ligne de terre (6) comprenant un conducteur externe terre (6e) et un conducteur interne terre (6i) reliés ensemble par le moyen de coupure (11) de terre, et
le moyen de coupure (9) de ligne principale comprend :
i. un premier contact (93), reliant dans un état fermé un conducteur d'alimentation d'installation (32i) et un conducteur phase primaire (32e) formant ensemble une phase de la première ligne principale (3),
ii. un deuxième contact, reliant dans un état fermé un conducteur retour de phase (42e) et un conducteur de retour d'alimentation d'installation (42i) formant ensemble un retour de phase de la deuxième ligne principale (4),
iii. le système ouvrant le moyen de coupure (9) de ligne principale à l'état ouvert ouvrant la première et la deuxième ligne principales (3, 4) avant que le moyen de coupure (11) de terre ouvre la ligne de terre (6).

13. Système (1b) selon la revendication précédente, dans lequel le réseau d'alimentation primaire est un réseau phase-neutre, dans lequel la deuxième ligne principale (4) est un neutre et
en ce que le réseau câblé (2) comprend en outre un réseau d'alimentation secondaire (17) comprenant :
i. une ligne de phase secondaire (173) pour être reliée au conducteur d'alimentation d'installation (34i) et
ii. une ligne neutre secondaire (174) pour être reliée au conducteur de retour d'alimentation d'installation (42i),
**caractérisé en ce que** le système de protection (1b) comprend :
a. un deuxième moyen de coupure (26), comprenant un premier contact (263) pour relier la ligne de phase secondaire (173) au conducteur d'alimentation d'installation (34i), et un deuxième contact (264) pour relier la ligne neutre secondaire (174) au conducteur de retour d'alimentation d'installation (42i),
b. un moyen d'inversion (20) de la ligne de terre (6) commandé par les moyens de commande (2) et actionnable entre une première position mise à la terre reliant le conducteur interne terre (6i) de la ligne de terre destinée à être reliée à la masse (76) de l'équipement au moyen de coupure (11) de la ligne terre (6) et une deuxième position de mise au neutre du conducteur interne terre (6i) au conducteur de retour d'alimentation d'installation (42i).
